# FASCICULE DE BREVET EUROPEEN

(11) **EP 0 774 378 B1**
(45) Date de publication et mention de la délivrance du brevet: **17.10.2001**
(21) Numéro de dépôt: 96402455.8
(22) Date de dépôt: 15.11.1996
(51) Int. Cl.: B60Q 1/30, B60P 3/22

(54) **Citerne constituée par une partie cylindrique**
Tankcontainer,bestehend aus einem zylindrischen Teil
Tankcontainer constituted by a cylindrical part

(30) Priorité: 16.11.1995 FR 9513611
(43) Date de publication de la demande: 21.05.1997
(73) Titulaire: S.A. ETABLISSEMENTS MAGYAR, F-21000 Dijon (FR)
(72) Inventeur: Magyar, Georges, 21004 Dijon (FR)
(74) Mandataire: Pernez, Helga

(56) Documents cités:
- US-A- 2 991 116
- US-A- 3 158 383

## Description

La présente invention concerne une citerne pour le transport de produits respectivement une citerne calorifugée constituée par une partie cylindrique entourée au moins partiellement par des matériaux d'isolation, recouvert extérieurement par une enveloppe tubulaire fermée à son extrémité frontale arrière par un fond en forme de calotte.

Les citernes sont formées par un corps tubulaire fermé fontalement par un fond de citerne.

Les citernes calorifugées sont destinées en particulier aux transports de produits alimentaires devant être conservés à une température basse.

De manière réglementaire, les citernes sont munies de feux de signalisation qui sont habituellement disposés sur le châssis de la remorque citerne.

De ce fait, ces feux sont difficilement visible en raison de leur position basse. Le but de la présente invention est d'améliorer de telles citernes en proposant un fond de citerne permettant d'intégrer les feux de signalisation, et de les positionner à une plus grande hauteur.

A cet effet, l'invention concerne une citerne comportant un fond présentant dans sa partie supérieure au moins un logement pour recevoir au moins un feu de signalisation. Ce logement présente un orifice pour le passage des moyens d'alimentation. Une telle citerne permet d'intégrer parfaitement les feux de signalisation en un endroit visible de loin, sans pour autant dégrader les qualités d'isolation ou d'aérodynamisme de la citerne. Avantageusement, le logement est formé par une rainure transversale.

Selon un premier mode de réalisation, le logement est formé par moulage d'un fond de citerne en matière plastique, par exemple en polyester.

Selon un autre mode de réalisation, le logement est formé par emboutissage d'un fond d'isolation métallique, par exemple en acier inoxydable.

L'invention sera mieux comprise à la lecture de la description qui suit, concernant un exemple non limitatif de réalisation en référence aux dessins annexés où :

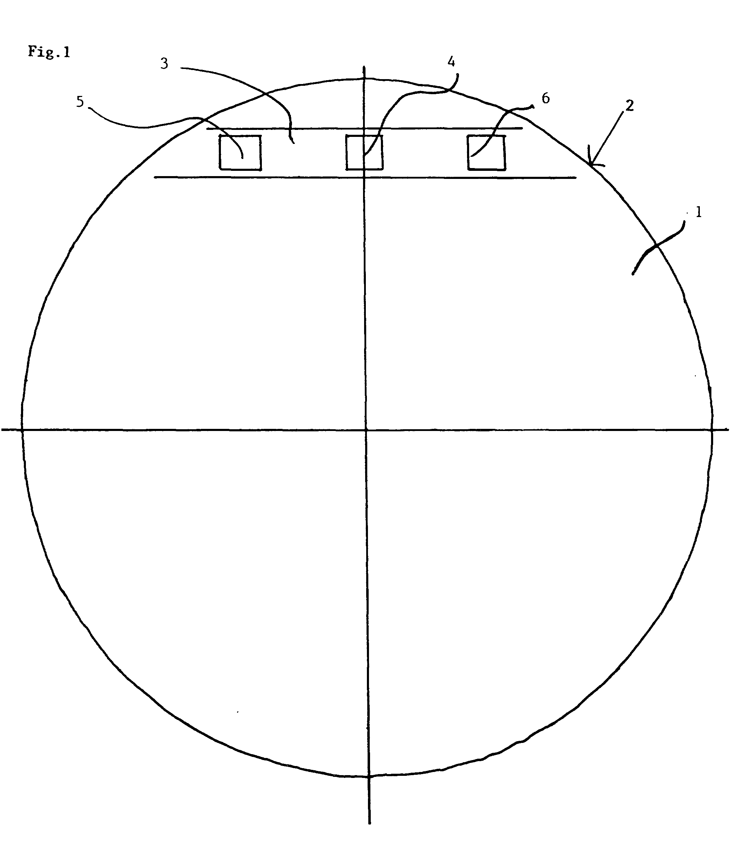

- la figure 1 représente une vue de face du fond de citerne
- la figure 2 représente une vue en coupe partielle d'une telle citerne.

Le fond de citerne (1) est constitué par une pièce en forme de calotte de section discale. Elle présente à sa partie supérieure (2) un logement (3) disposé transversalement. Les dimensions de ce logement et sa forme sont déterminées de façon à permettre l'intégration d'un feu central (4) ainsi que 2 feux latéraux (5, 6), le feu central (4), par exemple, un feu s'illuminant en cas de freinage, et les feux latéraux (5, 6) sont des feux répétiteurs des clignotants du véhicule.

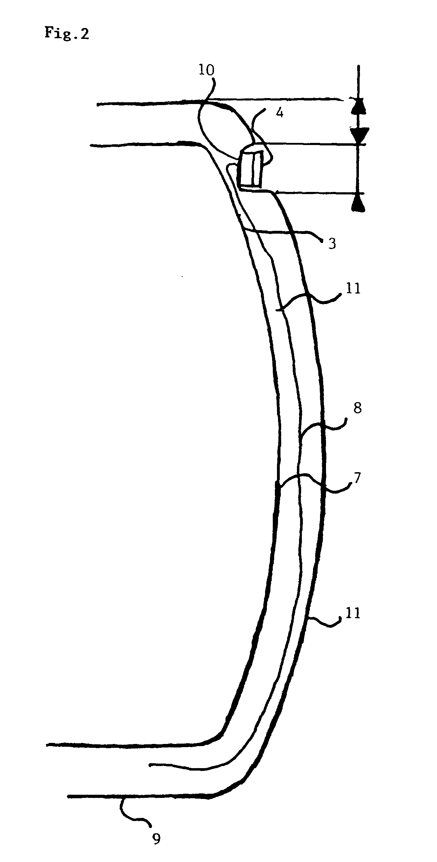

La figure 2 représente une vue partielle en coupe de la partie arrière de la citerne. La citerne (7) est recouverte d'un matériau d'isolation (8) par exemple de la mousse de fibres de verre. L'ensemble est habillé avec une enveloppe tubulaire (9), par exemple en acier inoxydable. La partie frontale arrière est recouverte par un fond de citerne (1) en forme de calotte. Le logement (3) forme une dépression dont la profondeur correspond sensiblement à la largeur dû à l'épaisseur du feu de signalisation (4). Le fond (10) du logement (3) est percé pour permettre le passage d'un câble électrique (11) d'alimentation du feu (4).

L'invention est décrite dans ce qui précède à titre d'exemple non limitatif. L'homme du métier sera en mesure de modifier l'invention sans pour autant sortir de son cadre tel que défini pas les revendications suivantes, en particulier en choisissant des formes de logement spécifiques.

## Revendications

1. Citerne constituée par une partie cylindrique (7) fermée à son extrémité frontale arrière par un fond (1) en forme de calotte **caractérisé en ce que** le dit fond présente dans sa partie supérieure (2) au moins un logement (3) pour recevoir au moins un feu de signalisation (4 à 6).

2. Citerne selon la revendication 1 **caractérisé en ce que** le dit logement (3) présente un orifice pour le passage de moyens d'alimentation des feux.

3. Citerne selon la revendication 1 ou 2 **caractérisée en ce qu'**elle est constituée par une partie cylindrique (7) entourée au moins partiellement par des matériaux d'isolation (8), recouvert par une enveloppe tubulaire (9) fermée à son extrémité frontale arrière par un fond (1) en forme de calotte présentant dans sa partie supérieure (2) au moins un logement (3) pour recevoir au moins un feu de signalisation (4 à 6), le dit logement (3) présentant un orifice pour le passage de moyens d'alimentation des feux.

4. Citerne calorifugée selon l'une quelconque des revendications 1 à 3 **caractérisée en ce que** le logement est formé par une rainure transversale.

5. Citerne selon l'une quelconque des revendications 1 à 3 **caractérisée en ce que** le logement (3) est formé par moulage d'un fond (1) en matière plastique.

6. Citerne selon l'une quelconque des revendications 1 à 4 **caractérisée en ce que** le logement (3) est formé par emboutissage d'un fond de citerne (1) métallique.

## Patentansprüche

1. Zisterne, bestehend aus einem an ihrem hinteren Vorderende durch einen kappenförmigen Boden (1) abgeschlossenen zylindrischen Teil (7), **dadurch gekennzeichnet, dass** dieser Boden in seinem oberen Teil (2) mindestens eine Lagerung (3) aufweist, um mindestens eine Signallaterne (4 bis 6) aufzunehmen.

2. Zisterne nach Anspruch 1, **dadurch gekennzeichnet, dass** die Lagerung (3) eine Öffnung für den Durchgang eines Versorgungsmittels der Laterne aufweist.

3. Zisterne nach Anspruch 1 oder 2, **dadurch gekennzeichnet, dass** sie aus einem zylindrischen Teil (7) besteht, das mindestens teilweise von mit einem röhrenförmigen Mantel (9) überzogenen Isolierstoffen (8) umgeben ist, das an seinem hinteren Vorderende von einem kappenförmigen Boden (1) abgeschlossen ist, der in seinem oberen Teil (2) mindestens eine Lagerung (3) aufweist, um mindestens eine Signallaterne (4 bis 6) aufzunehmen, wobei die Lagerung (3) eine Öffnung für den Durchgang eines Versorgungsmittels für die Laterne aufweist.

4. Wärmegedämmte Zisterne nach einem der Ansprüche 1 bis 3, **dadurch gekennzeichnet, dass** die Lagerung aus einer Querrille gebildet ist.

5. Zisterne nach einem der Ansprüche 1 bis 3, **dadurch gekennzeichnet, dass** die Lagerung (3) durch Formgießen eines Kunststoffbodens (1) gebildet ist.

6. Zisterne nach einem der Ansprüche 1 bis 4, **dadurch gekennzeichnet, dass** die Lagerung (3) durch Tiefziehen eines metallischen Zisternenbodens (1) gebildet ist.

## Claims

1. Tank constituted of a cylindrical part (7) closed at its rear frontal end by a base (1) in the shape of a cap **characterised in that** said base has in its upper part (2) at least one housing (3) to receive at least one light signal (4 to 6).

2. Tank according to claim 1 **characterised in that** said housing (3) has an orifice for passage of supply means for the lights.

3. Tank according to either one of claims 1 or 2 **characterised in that** it is constituted of a cylindrical part (7) surrounded at least partially by insulation materials (8), covered by a tubular envelope (9) closed at its rear frontal end by a base (1) in the shape of a cap with, in its upper part (2), at least one housing (3) for receiving at least one signal light (4 to 6), said housing (3) having an orifice for passage of supply means for the lights.

4. Thermally insulated tank according to any one of claims 1 to 3 **characterised in that** the housing is formed by a transversal groove.

5. Tank according to any one of claims 1 to 3 **characterised in that** the housing (3) is formed by moulding a base (1) in plastic material.

6. Tank according to any one of claims 1 to 4 **characterised in that** the housing (3) is formed by stamping a metallic tank base (1).
